# EUROPEAN PATENT SPECIFICATION

(11) **EP 0 693 533 B1**
(45) Date of publication and mention of the grant of the patent: **19.11.1997**
(21) Application number: 95111541.9
(22) Date of filing: 21.07.1995
(51) Int. Cl.: C08L 83/04, C08K 5/54

(54) **Room temperature-curing silicone elastomer composition**
Bei Umgebungstemperatur härtende Silikon-Elastomer-Zusammensetzung
Composition de silicone élastomérique durcissable à température ambiante

(30) Priority: 22.07.1994 JP 192128/94
(43) Date of publication of application: 24.01.1996
(73) Proprietor: Dow Corning Toray Silicone Company, Limited, Tokyo 103 (JP)
(72) Inventor: Hori, Seiji, Dow Corning Toray Silicone Co., Ltd., Nihonbashi-Muromachi, Chuo-ku, Tokyo 103 (JP); Hatanaka, Hidekatsu, Dow Corning Toray Silicone, Nihonbashi-Muromachi, Chuo-ku, Tokyo 103 (JP); Saruyama, Toshio, Dow Corning Toray Silicone, Nihonbashi-Muromachi, Chuo-ku, Tokyo 103 (JP)
(74) Representative: Spott, Gottfried, Dr.

(56) References cited:
- EP-A- 0 575 863
- US-A- 4 965 333

## Description

The present invention relates to a room temperature-curing silicone elastomer composition which is cured at room temperature to become a low modulus and high elongation silicone elastomer.

Compositions which cure at room temperature to become silicone elastomers have been known previously, and used widely in industry. The known mechanisms of room temperature curing are hydrosilylation reaction, ultraviolet radiation, and the curing mechanism of condensation reaction of silanol groups or silicon-bonded functional groups. Among these, the silicone elastomer composition cured by the condensation reaction is featured in that its adhesive properties are easily realized at room temperature; its curing is hardly inhibited by impurities in the curing atmosphere; it is curable in a short time by simply mixing the principal agent and the curing agent; it is stably stored for extended time as one liquid type composition; it is curable by leaving in air; and is widely used as an adhesive, coating agent, and sealing agent. However, because of the requirement before curing to maintain the workability in manual operations such as mixing, injecting, and finishing, there has been a problem in that the mechanical characteristics of the cured elastomer are limited. Specifically, the molecular weight of polydiorganosiloxane, the principal constituent, has to be limited below a certain level to provide easy workability. Because of this, it is difficult to reduce the stiffness of the cured elastomer as shown by such characteristics as hardness and modulus. The easiest method to solve this problem has been the addition of non-reactive polydiorgano-siloxane. However, this method has faults such that the added polydiorganosiloxane migrates to the surface after curing, and impares adhesive properties. Another solution has been to use a multifunctional bridging agent and a bifunctional chain extension agent together, wherein bridging is carried out while the polydiorganosiloxane chain is being extended during the curing reaction. This approach reduces the crosslinking density after cure. Two methods have been proposed for this purpose: (1) a method in which siloxane having two N,N-dialkylaminoxy groups in a molecule and siloxane having three N,N-dialkylaminoxy groups per molecule are used together, and (2) a method in which silane having two N-alkylacetoamide groups per molecule and silane having three N-alkylacetoamide groups in a molecule are used together. However, these methods have also had problems. In the first using N,N-dialkylaminoxy groups, N,N-dialkylhydroxyamine is produced during cure as a by-product. The unpleasant smell of this hydroxylamine by-product is the problem. Furthermore, hydroxylamine is strongly basic, and whenever the atmospheric temperature rises slightly, it causes scission of polydiorganosiloxane molecules, and inhibits the cure. This has been a grave problem. Also, since the siloxane having N,N-dialkylaminoxy groups is expensive, this is an economical disadvantage. In the second proposal, which uses N-alkylacetoamide groups, the unpleasant smell of by-product N-alkylacetoamide during cure has also been a problem. Furthermore, when there is active hydrogen-containing compound such as alcohol in the mixture environment, the N-alkylacetoamide causes a substitution reaction with such groups as alkoxy group. As a result, this inhibits the curing which has been another problem. Further, since the silane having N-alkylacetoamide groups is expensive, this is also an economical disadvantage. Instead of using such special and expensive functional groups as seen in these proposals, it has also been proposed to carry out chain extension and bridging using a functional group which has been widely used and does not cause side reaction. In JP-A 63-83167, a method has been taught to use a chain extension agent such as RNHCH₂MeSi(OMe)₂. However, since it is extremely difficult to manufacture this agent economically, and it is difficult to balance it stably with a bridging agent, it cannot be put to practical use. Also, in JP-A 6-9875 (also U.S. Patent 5,300,612), a method is disclosed using a chain extension agent such as [(CH₃)₃SiO]₂Si(OMe)₂. However, when this agent was actually used, an increase of modulus was found in a subsequent dagradation test to be too large to be put to practical use. Further, in U.S. Patent 4,687,829, a method has been described to use Ph[(CH₃)₃SiO]Si(OCH₃)₂, but the physical properties at the initial stage did not reach the level obtainable by using N,N-dialkylaminoxy group.

The present inventors have carried out intensive studies to solve the aforesaid problems, and as a result, reached this invention.

Our objective is to provide a room temperature-curing silicone elastomer composition which has excellent workability before curing, and which can form a low modulus and high elongation silicone elastomer after curing.

The present invention provides a room temperature-curing silicone elastomer composition comprising
(A) 100 parts by weight of a silanol terminated straight chain polyorganosiloxane having a viscosity at 25°C of from 0.00002 to 1 m²/s,
(B) 0.1 to 20 parts by weight, per 100 parts by weight of (A), of a siloxane expressed by the formula

   R¹(R² ₙR³ ₍₃₋ₙ₎SiO)Si(OR⁴)₂

   in which R¹, R², and R³ are aliphatic monovalent hydrocarbon groups, R⁴ is a hydrocarbon group having from 1 to 8 carbon atoms per group, and n is 0 or 1,
(C) 0.01 to 20 parts by weight, per 100 parts by weight of (A), of an organosilane expressed by R⁵₍₄₋ₐ₎Si(OR⁴)ₐ where R⁴ is the same as defined in (B), and R⁵ is a monovalent hydrocarbon group having from 1 to 20 carbon atoms per group, and a is 3 or 4, or its partially hydrolyzed product, and
(D) 0.01 to 20 parts by weight, per 100 parts by weight of (A), of a curing catalyst.

The (A) ingredient of this invention, the polyorganosiloxane, is a substantially straight chain polyorganosiloxane capped with silanol groups. Here, "substantially straight chain" means that it can be not only a perfectly straight chain polymer, i.e. linear, but it may also be somewhat branched straight chain ploymer. Organic groups bonded to silicon atoms in this polyorganosiloxane are alkyl groups such as methyl, ethyl, propyl, butyl, and octyl; alkenyl groups such as vinyl, allyl, and hexenyl; aryl groups such as phenyl, tolyl, and benzyl; and substituted alkyl groups such as 3,3,3-trifluoropropyl, 3-chloropropyl, 3-cyanopropyl, and chloromethyl. If the viscosity of this polyorganosiloxane is too low, the rubber elasticity of the cured sealant can also be low. If the viscosity is too high, the extrusion load becomes heavy and discharging operations from containers such as cartridges becomes difficult. Therefore, the viscosity at 25°C should be in the range of 0.00002 to 1 m²/s, and preferably in the range of 0.0001 to 0.1 m²/s.

The (B) ingredient, the siloxane having two hydrolyzable groups, functions as the chain extension agent for (A). This siloxane is expressed by the formula

R¹(R² ₙR³ ₍₃₋ₙ₎SiO)Si(OR⁴)₂

in which R¹, R², and R³ are aliphatic monovalent hydrocarbon groups, R⁴ is a monovalent hydrocarbon group of 1 to 8 carbon atoms, and n is 0 or 1. R¹ and R² are preferably vinyl or methyl, and R³ is preferably methyl. For R⁴, preferably methyl, ethyl, or normal propyl is used, and it is selected by considering the curing rate. For R⁴, a monovalent hydrocarbon group having unsaturated linkage can also be used. Specifically, (B) can be illustrated by:

CH₂=CH[CH₂=CH(CH₃)₂SiO]Si(OCH₃)₂ ,

CH₂=CH[CH₂=CH(CH₃)₂SiO]Si(OC₂H₅)₂ ,

CH₂=CH[(CH₃)₃SiO]Si(OCH₃)₂ ,

or

CH₃[(CH₃)₃SiO]Si(OCH₃)₂.

The amount of (B) is determined by considering the balance with (C) for obtaining the required physical properties of the cured silicone elastomer, the amount of silanol in (A), and any materials added other than (A)-(D). Impurities such as water contained in these ingredients should also be considered. The amount required is from 0.1 to 20 parts by weight per 100 parts by weight of (A). If it is less than 0.1, the curing may not be sufficient, or the desired elongation may not be obtained. If it exceeds 20, the curing may be too slow, or the curing may not be completed.

The (C) ingredient functions as the crosslinking agent for (A). This crosslinking agent is an organosilane expressed by R⁵₄₋ₐSi(OR⁴)ₐ where R⁴ is the same as defined above, R⁵ is a monovalent hydrocarbon of 1 to 20 carbon atoms, and a is 3 or 4, or its partially hydrolyzed product. Specifically, (C) is illustrated by tetramethoxysilane, tetraethoxysilane, tetraiso-propoxysilane, methyltrimethoxysilane, vinyltrimethoxysilane, decyltrimethoxysilane, methyltriethoxysilane, phenyltrimethoxy-silane, and methyltri(ethoxymethoxy)silane. Preferably, one of these compound is selected as (C), but two or more of them can be added as needed. Also, partially hydrolyzed products of these compounds can be used. The amount of (C) is determined by considering the balance with (B) for the required physical properties after the cure, the amount of silanol in (A), materials added other than (A)-(D), and impurities such as water contained in these ingredients. The amount required is from 0.01 to 20 parts by weight per 100 parts by weight of (A). If this amount is less than 0.01, incomplete curing occurs. If it exceeds 20, curing is too slow and the modulus is too high.

The (D) ingredient is a catalyst to promote curing between (A), (B) and (C). Any previously known catalyst for promoting the curing reaction of (A) and (C) is satisfactory as long as the functions of our composition are not impaired. (D) can be a tin based catalyst such as dialkyl-tincarboxylate, dialkyltinbis(acetylacetonate), or tin octylate [Sn(OOCC₇H₁₅)₂], or other catalysts such as iron octylate, zirconium octylate, titanate esters such as tetrabutyltitanate, tetra(isopropyl)titanate, and dibutoxytitaniumbis(acetylaceto-nate), or an amine base catalyst such as tetramethylguanidine. Among these, tin based catalysts are preferable. Preferably, (D) is used as a single kind of catalyst, but two or more kinds of catalysts can also be used. Also, when two or more kinds of catalysts are used, it is preferable to use a mixture of a tetravalent tin catalyst, such as dibutyltinbisacetylacetonate, and a divalent tin catalyst such as tin octylate, where the ratio of these compounds is within the range of 9:1 to 1:9. The amount of (D) should be 0.01 to 20 parts by weight per 100 parts by weight of (A). If it is less than 0.01, it is not enough to promote curing. If it exceeds 20, many problems such as degradation of water resistance or heat resistance may arise.

In the composition of the present invention, in addition to the ingredients (A)-(D), there can be added, as needed, polydiorganosiloxane which does not have silanol group; polydiorganosiloxane which has silanol group only at one end; inorganic fillers such as fumed silica, precipitation silica, quartz fine powder, carbon black, and calcium carbonate; and the hydrophobicized versions of these fillers; silicone resin; fluidity regulator; silane based or siloxane based tackifier; pigment; heat-resisting agent; flame retardant; and organic solvent.

The mixing order of (A)-(D) to make our room temperature-curing silicone elastomer composition is preferably in such a manner that the (B), (C), and (D) portions are added to the (A) portion in that order. Alternatively, Components (B)-(D) are added all at the same time to (A). Otherwise, the desired characteristics, in particular, the elongation after cure may not be obtained. Excluding these points, there is no particular limitation in the order of mixing of ingredients.

Our composition has excellent workability before curing, and forms a low modulus and high elongation silicone rubber after curing. Therefore, this composition is particularly useful as an adhesive, coating, or sealing material.

In the following, the present invention is explained by Examples and Comparison Examples. The viscosity therein is the value at 25°C, part or parts are by weight and float glass was used as the substrate material to be bonded. Also, Me represents methyl, and Vi represents vinyl.

### EXAMPLE 1

A room temperature-curing silicone elastomer composition was prepared by sufficiently mixing 100 parts of silanol-capped polydimethylsiloxane, having a viscosity 0.012 m²/s; 100 parts of colloidal calcium carbonate; varying amounts of alkoxysilane expressed by the formula, C₁₀H₂₁Si(OMe)₃; siloxane expressed by the formula, Vi(ViMe₂SiO)Si(OMe)₂; and dibutyltinbisacetylacetonate as shown in Table 1. The physical properties of this composition were measured by the method specified in JIS A5758 for construction sealing materials. Namely, test pieces were prepared by the method specified in JIS A5758, paragraph 4.9, and tensile adhesion tests were performed. Results of these measurements are as shown in Table 1.

### EXAMPLE 2

A room temperature-curing silicone elastomer composition was prepared by sufficiently mixing 100 parts of silanol-capped polydimethylsiloxane, having a viscosity of 0.012 m²/s; 100 parts colloidal calcium carbonate; Varying amounts of alkoxysilane expressed by the formula, ViSi(OMe)₃; siloxane expressed by the formula, Vi(ViMe₂SiO)Si(OMe)₂; and tin catalyst as shown in Table 1. Here, the tin catalyst used was a mixture of dibutyltinbisacetylacetonate (a tetravalent tin), and tin octylate (a divalent tin), in the ratio of 10/3. The characteristics of this composition were measured by the same manner as Example 1. Results of these measurements are as shown in Table 1.

### EXAMPLE 3

A room temperature-curing silicone elastomer composition was prepared by sufficiently mixing 100 parts of silanol-capped polydimethylsiloxane having a viscosity is 0.012 m²/s; 100 parts colloidal calcium carbonate; amounts of alkoxysilane expressed by the formula, C₁₀H₂₁Si(OMe)₃; siloxane expressed by the formula, Vi(ViMe₂SiO)Si(OMe)₂; and tin catalyst as shown in Table 1. Here, the tin catalyst used was a mixture of dibutyltinbisacetylacetonate (a tetravalent tin), and tin octylate (a divalent tin), in the ratio of 10/3. The characteristics of this composition were measured in the same manner as Example 1. Results of these measurements are as shown in Table 1. Also, after the completion of the initial stage curing, degradation tests (physical properties after heating at 90°C for a week, and physical properties after soaking in warm water of 50°C for a week) were conducted, and the results are shown in Table 2.

### EXAMPLE 4

A room temperature-curing silicone elastomer composition was prepared by sufficiently mixing 100 parts of silanol-capped polydimethylsiloxane having a viscosity of 0.012 m²/s; 100 parts colloidal calcium carbonate; amounts of alkoxysilane expressed by the formula, C₁₀H₂₁Si(OMe)₃; siloxane expressed by the formula, Vi(Me₃SiO)Si(OMe)₂; and tin catalyst shown in Table 1. Here, the tin catalyst used was a mixture of dibutyltinbisacetylacetonate (a tetravalent tin), and tin octylate (a divalent tin), in the ratio of 10/3. The characteristics of this composition were measured in the same manner as Example 1. Results of these measurements are shown in Table 1.

### EXAMPLE 5

A room temperature-curing curing silicone elastomer composition was prepared after sufficiently mixing 100 parts of silanol-capped polydimethylsiloxane having a viscosity of 0.012 m²/s; 100 parts of colloidal calcium carbonate; amounts of alkoxysilane expressed by the formula, C₁₀H₂₁Si(OMe)₃; siloxane expressed by the formula, Me(Me₃SiO)Si(OMe)₂; and tin catalyst shown in Table 1. Here, the tin catalyst used was a mixture of dibutyltinbisacetylacetonate (a tetravalent tin), and tin octylate (a divalent tin), in the ratio of 10/3. The characteristics of this composition were measured in the same manner as Example 1. Results of these measurements are shown in Table 1.

### COMPARISON EXAMPLE 1

A room temperature-curing silicone elastomer composition was prepared after sufficiently mixing 100 parts of silanol-capped polydimethylsiloxane having a viscosity of 0.012 m²/s; 100 parts of colloidal calcium carbonate; amounts of alkoxysilane expressed by the formula, C₁₀H₂₁Si(OMe)₃; and tin catalyst shown in Table 1. Here, the tin catalyst used was a mixture of dibutyltinbisacetylacetonate (a tetravalent tin), and tin octylate (a divalent tin), in the ratio of 10/3. The characteristics of this composition were measured in the same manner as Example 1. Results of these measurements areshown in Table 1.

### COMPARISON EXAMPLE 2

A room temperature-curing silicone elastomer composition was prepared after sufficiently mixing 100 parts of silanol-capped polydimethylsiloxane having a viscosity of 0.012 m²/s; 100 parts colloidal calcium carbonate; amounts of alkoxysilane expressed by the formula, C₁₀H₂₁Si(OMe)₃; siloxane expressed by the formula, (Me₃SiO)₂Si(OMe)₂; and tin catalyst shown in Table 2. Here, the tin catalyst used was a mixture of dibutyltinbisacetylacetonate (a tetravalent tin), and tin octylate (a divalent tin), in the ratio of 10/3. The characteristics of this composition were measured in the same manner as Example 1. Results of these measurements were shown in Table 2. Also, after the completion of the initial stage curing, degradation tests (physical properties after heating at 90°C for a week, and physical properties after soaking in warm water of 50°C for a week) were performed, and the results are shown in Table 2.

**TABLE 1**

| | EXAMPLE 1 | EXAMPLE 2 | EXAMPLE 3 | EXAMPLE 4 | EXAMPLE 5 | COMPARISON EXAMPLE 1 |
|---|---|---|---|---|---|---|
| C₁₀H₂₁Si(OMe)₃* | 0.09 | - | 0.09 | 0.09 | 0.09 | 2 |
| ViSi(OMe)₃ | - | 0.06 | - | - | - | - |
| Vi(ViMe₂SiO)Si(OMe)₂ | 1.4 | 1.4 | 1.4 | - | - | - |
| Vi(Me₃SiO)Si(OMe)₂ | - | - | - | 1.4 | - | - |
| Me(Me₃SiO)Si(OMe)₂ | - | - | - | - | 2 | - |
| Dibutyltinbisacetylacetonate | 0.26 | 0.2 | 0.2 | 0.2 | 0.2 | 0.2 |
| Tin octylate | - | 0.06 | 0.06 | 0.06 | 0.06 | 0.06 |
| | | | | | | |

| PHYSICAL PROPERTIES | | | | | | |
|---|---|---|---|---|---|---|
| 50% MODULUS, N (kgf)/cm² | 1.0 | 1.3 | 1.4 | 1.1 | 1.7 | 3.1 |
| Tensile Strength N (kgf)/cm² | 5.1 | 7.3 | 7.7 | 7.4 | 6.6 | 7.2 |
| Extension, % | 991 | 741 | 851 | 891 | 730 | 181 |
| CF rate | 100 | 100 | 100 | 100 | 100 | 100 |

| | | | | | | |
|---|---|---|---|---|---|---|
| *ingredients in table are in parts by weight | | | | | | |

**TABLE 2**

| | EXAMPLE 3 | COMPARISON EXAMPLE 2 |
|---|---|---|
| C₁₀H₂₁Si(OMe)₃* | 0.09 | 1 |
| Vi(ViMe₂SiO)Si(OMe)₂ | 1.4 | - |
| Me(Me₃SiO)Si(OMe)₂ | - | 2 |
| Dibutyltinbisacetylacetonate | 0.2 | 0.2 |
| Tin octylate | 0.06 | 0.06 |
| | | |

| PHYSICAL PROPERTIES | | |
|---|---|---|
| Initial, 20°C/W + 50°C/1W | | |
| 50% MODULUS, N (kgf)/cm² | 1.4 | 1.7 |
| Tensile Strength, N (kgf)/cm² | 7.7 | 10.1 |
| Extension, % | 851 | 747 |
| CF rate | 100 | 100 |
| | | |
| Initial + 90°C/1W | | |
| 50% MODULUS, N (kgf)/cm² | 1.4 | 2.3 |
| Tensile Strength, N (kgf)/cm² | 7.4 | 13.7 |
| Extension, % | 741 | 600 |
| CF rate | 100 | 100 |
| | | |
| Initial + 50°C warm water/1W | | |
| 50% MODULUS, N (kgf)/cm² | 1.0 | 2.8 |
| Tensile Strength, N (kgf)/cm² | 6.3 | 9.9 |
| Extension, % | 760 | 578 |
| CF rate | 100 | 100 |

| | | |
|---|---|---|
| * ingredients in table are in parts by weight | | |

Because the room temperature-curing silicone elastomer composition of the present invention has ingredients (A), (B), (C), and (D), and in particular that it contains siloxane (B), it exhibits excellent workability before curing, and it forms silicone rubber with low modulus and high elongation with excellent durability after curing.

## Claims

1. A room temperature-curing silicone elastomer composition comprising
(A) 100 parts by weight of a silanol terminated substantially straight chain polyorganosiloxane having a viscosity at 25°C of from 0.00002 to 1 m²/s,
(B) 0.1 to 20 parts by weight per 100 parts by weight of (A) of a siloxane expressed by the formula
R¹(R² ₙR³ ₍₃₋ₙ₎SiO)Si(OR⁴)₂
in which R¹, R², and R³ are aliphatic monovalent hydrocarbon groups, R⁴ is a hydrocarbon group having from 1 to 8 carbon atoms per group, and n is 0 or 1,
(C) 0.01 to 20 parts by weight per 100 parts by weight of (A) of an organosilane expressed by R⁵₍₄₋ₐ₎Si(OR⁴)ₐ where R⁴ is the same as defined in (B), and R⁵ is a monovalent hydrocarbon group having from 1 to 20 carbon atoms per group, and a is 3 or 4, or its partially hydrolyzed product, and
(D) 0.01 to 20 parts by weight per 100 parts by weight of (A) of a curing catalyst.

2. The silicone elastomer composition of claim 1, in which R¹ and R² are vinyl groups, R³ is a methyl group, and n is 1.

3. The silicone elastomer composition of claim 1, in which R¹ is a vinyl group, R³ is a methyl group, and n is 0.

4. The silicone elastomer composition of claim 1, in which R¹ and R³ are methyl groups, and n is 0.

5. The silicone elastomer composition of claim 1, in which the curing catalyst is a tin based compound.

6. The silicone elastomer composition of claims 2 or 3, in which (C) is a silane of the formula C₁₀H₂₁Si(OCH₃)₃.

7. The silicone elastomer composition of claim 6, in which (D) is dibutyltinbis(acetylacetonate).

8. The silicone elastomer composition of claim 2, in which (C) is vinyltrimethoxysilane.

9. The silicone elastomer composition of any claims 1, 6, 8, in which (D) is a mixture of 10 to 90 weight % of dibutyltinbis(acetylacetonate) and 90 to 10 weight % of tin octylate.

10. The silicone elastomer composition of claim 1 further comprising a filler.

## Patentansprüche

1. Bei Raumtemperatur härtende Silikonelastomerzusammensetzung, umfassend
(A) 100 Gew.-Teile eines im wesentlichen geradkettigen Polyorganosiloxans mit Silanolendgruppen mit einer Viskosität von 0,00002 bis 1 m²/s bei 25°C,
(B) 0,1 bis 20 Gew.-Teile pro 100 Gew.-Teile (A) eines Siloxans der Formel
R¹(R² ₙR³ ₍₃₋ₙ₎SiO)Si(OR⁴)₂,
worin R¹, R² und R³ aliphatische monovalente Kohlenwasserstoffgruppen sind, R⁴ eine Kohlenwasserstoffgruppe mit 1 bis 8 Kohlenstoffatomen pro Gruppe ist und n 0 oder 1 ist,
(C) 0,01 bis 20 Gew.-Teile pro 100 Gew.-Teile (A) eines Organosilans der Formel
R⁵ ₍₄₋ₐ₎Si(OR⁴)ₐ,
worin R⁴ wie für (B) definiert ist und R⁵ eine monovalente Kohlenwasserstoffgruppe mit 1 bis 20 Kohlenstoffatomen pro Gruppe ist und a 3 oder 4 ist, oder ein teilweise hydrolysiertes Produkt, und
(D) 0,01 bis 20 Gew.-Teile pro 100 Gew.-Teile (A) eines Härtungskatalysators.

2. Silikonelastomerzusammensetzung nach Anspruch 1, worin R¹ und R² Vinylgruppen sind, R³ eine Methylgruppe ist und n 1 ist.

3. Silikonelastomerzwammensetzung nach Anspruch 1, worin R¹ eine Vinylgruppe ist, R³ eine Methylgruppe ist und n 0 ist.

4. Silikonelastomerzusammensetzung nach Anspruch 1, worin R¹ und R³ Methylgruppen sind und n 0 ist.

5. Silikonelastomerzusammensetzung nach Anspruch 1, worin der Härtungskatalysator eine Verbindung auf Zinnbasis ist.

6. Silikonelastomerzusammensetzung nach einem der Ansprüche 2 oder 3, worin (C) ein Silan der Formel C₁₀H₂₁Si(OCH₃)₃ ist.

7. Silikonelastomerzusammensetzung nach Anspruch 6, worin (D) Dibutylzinnbis(acetylacetonat) ist.

8. Silikonelastomerzusammensetzung nach Anspruch 2, worin (C) Vinyltrimethoxysilan ist.

9. Silikonelastomerzusammensetzung nach einem der Ansprüche 1, 6, 8, worin (D) eine Mischung aus 10 bis 90 Gew.-% Dibutylzinnbis(acetylacetonat) und 90 bis 10 Gew.-% Zinnoctylat ist.

10. Silikonelastomerzusammensetzung nach Anspruch 1, weiter enthaltend einen Füllstoff.

## Revendications

1. Composition d'élastomère de silicone durcissant à température ambiante, comprenant
(A) 100 parties en poids d'un polyorganosiloxane à chaîne substantiellement linéaire à extrémités silanols, ayant une viscosité à 25 °C de 0,00002 à 1 m²/s,
(B) 0,1 à 20 parties en poids, pour 100 parties en poids de (A), d'un siloxane représenté par la formule
R¹(R² ₙR³ ₍₃₋ₙ₎SiO)Si(OR⁴)₂
dans laquelle R¹, R² et R³ sont des groupes hydrocarbonés monovalents aliphatiques, R⁴ est un groupe hydrocarboné ayant de 1 à 8 atomes de carbone par groupe, et n est 0 ou 1,
(C) 0,01 à 20 parties en poids, pour 100 parties en poids de (A), d'un organosilane représenté par R⁵₍₄₋ₐ₎Si(OR⁴)ₐ où R⁴ est le même que celui défini dans (B), et R⁵ est un qroupe hydrocarboné monovalent ayant de 1 à 20 atomes de carbone par groupe, et a est 3 ou 4, ou son produit partiellement hydrolysé, et
(D) 0,01 à 20 parties en poids, pour 100 parties en poids de (A), d'un catalyseur de durcissement.

2. Composition d'élastomère de silicone selon la revendication 1, dans laquelle R¹ et R² sont des groupes vinyles, R³ est un groupe méthyle et n est 1.

3. Composition d'élastomère de silicone selon la revendication 1, dans laquelle R¹ est un groupe vinyle, R³ est un groupe méthyle et n est 0.

4. Composition d'élastomère de silicone selon la revendication 1, dans laquelle R¹ et R³ sont des groupes méthyles, et n est 0.

5. Composition d'élastomère de silicone selon la revendication 1, dans laquelle le catalyseur de durcissement est un composé à base d'étain.

6. Composition d'élastomère de silicone selon les revendications 2 ou 3, dans laquelle (C) est un silane de la formule C₁₀H₂₁Si(OCH₃)₃.

7. Composition d'élastomère de silicone selon la revendication 6, dans laquelle (D) est le bis(acétylacétonate) de dibutylétain.

8. Composition d'élastomère de silicone selon la revendication 2, dans laquelle (C) est du vinyltriméthoxysilane.

9. Composition d'élastomère de silicone selon l'une quelconque des revendications 1, 6, 8, dans laquelle (D) est un mélange de 10 à 90 % en poids de bis(acétylacétonate) de dibutylétain et 90 à 10 % en poids d'octylate d'étain.

10. Composition d'élastomère de silicone selon la revendication 1, comprenant en outre une charge.
